# EUROPÄISCHE PATENTSCHRIFT

(11) **EP 0 226 966 B1**
(45) Veröffentlichungstag und Bekanntmachung des Hinweises auf die Patenterteilung: **13.04.1994**
(21) Anmeldenummer: 86117272.4
(22) Anmeldetag: 11.12.1986
(51) Int. Cl.: G06F 13/42, G06F 13/38

(54) **Verfahren und Anordnung zur Übertragung von Informationen zwischen Teilnehmern an einem Bussystem**
Method and arrangement for information transmission between users of a bus system
Méthode et disposition pour la transmission d'informations entre des utilisateurs d'un système de bus

(30) Priorität: 14.12.1985 DE 3544378
(43) Veröffentlichungstag der Anmeldung: 01.07.1987
(73) Patentinhaber: Asea Brown Boveri Aktiengesellschaft, 68309 Mannheim (DE)
(72) Erfinder: Guzman-Edery, Jorge, Dipl.-Ing., D-8526 Bubenreuth (DE); Böer, Michael, Dipl.-Ing., D-6800 Mannheim 81 (DE)
(74) Vertreter: Rupprecht, Klaus, Dipl.-Ing.

(56) Entgegenhaltungen:
- EP-A- 0 109 973
- WO-A-85/03147

## Beschreibung

Die Erfindung bezieht sich auf ein Verfahren und eine Anordnung zur Übertragung von Informationen zwischen Teilnehmern an einem Bussystem. Solche Verfahren und Anordnungen werden z.B. angewendet für die Datenübertragung zwischen Geräteeinheiten (Teilnehmern), die an ein Bussystem innerhalb einer Fernwirkstation oder einer sonstigen leittechnischen Station, also einen Stationsbus angeschlossen sind.

Ein solcher Stationsbus ist z.B. in dem Aufsatz "Der Aufbau von Mikrocomputern und ihr Einsatz zur Sicherung von Fernwirktelegrammen", H. Herkert, NTG-Fachberichte Band 66, Seite 47 bis 55, Bild 1 dargestellt. Das dargestellte Bussystem ist mit prinzipiell gleichem Aufbau sowohl als internes Bussystem in einem Mikrocomputer als auch als Stationsbus in einer Fernwirkstation bekannt. Fernwirkstationen können mehrere Geräteeinheiten, die einen Mikroprozessor oder einen Computer enthalten, als Busteilnehmer aufweisen. Ein solches Bussystem enthält als Teilsysteme einen Datenbus, einen Steuerbus und einen Adressenbus. Jedes dieser Teilsysteme weist mehrere parallele Leitungen auf. Außerdem können für unterschiedliche Zwecke zusätzliche Leitungen zwischen einer Zentraleinheit und den übrigen Busteilnehmern vorgesehen sein, z.B. als Interrupt-Leitung, zur Geräte-Adressierung oder zur Synchronisierung.

Eine Datenübertragung - z.B. von einem Prozessor zu einem Ausgabebaustein - wird vorbereitet durch Anlegen einer Adresse am Adressenbus und der Daten am Datenbus. Erst wenn auf dem Steuerbus ein Schreibimpuls gesendet wird, übernimmt die adressierte Speicherstelle das auf dem Datenbus anstehende Bitmuster. Die dabei verwendeten Adressen sind Bezeichnungscode für bestimmte Speicherstelle. Je mehr Speicherstellen die an das bussystem angeschlossenen Teilnehmer aufweisen, destomehr Adressleitungen - typisch 15 bis 20 Leitungen - sind erforderlich; oder es sind Multiplex-Systeme mit aufwendigen Bussteuerungen notwendig. Für leistungsfähige Systeme müssen sehr hohe Taktraten verwendet werden, wodurch der Hardware-Aufwand und die Störempfindlichkeit hoch sind.

Der Erfindung liegt die Aufgabe zugrunde, ein Verfahren und eine Anordnung zur Übertragung von Daten zwischen Teilnehmern an einem Bussystem anzugeben, das einen geringen Aufwand für die Steuerung und die Adressierung erfordert und trotzdem leistungsfähig ist.

Diese Aufgabe wird gelöst durch ein Verfahren zur Übertragung von Informationen zwischen Teilnehmern an einem Bussystem, mit nachstehenden Verfahrensmerkmalen:
a) eine am Bussystem angeschlossene Zentraleinheit sendet zumindest am Anfang einer von ihr initiierten Bus-Prozedur, wobei eine Bus-Prozedur der Ablauf einer festgelegten Sendefolge zwischen Teilnehmern ist, eine definierte Anweisung, genannt Aufruf-Kommando-Code, die aus einem Anweisungsvorrat ausgewählt wird und für die Dauer der Bus-Prozedur gültig bleibt, wobei die definierten Anweisungen Elemente einer höheren System-Kommandosprache sind, mit denen zumindest eine Bus-Prozedur festgelegt ist und mit denen zusätzliche Vereinbarungen getroffen werden können, insbesondere bezüglich des Übertragungsprotokolls, wie z.B. Datenformat, Blocklänge, eines Sicherungsverfahrens, wie z.B. Prüfzeichen, Übertragungswiederholung, oder der beim empfangenden Teilnehmer auszulösenden Verarbeitungsfunktionen;
b) jedem Teilnehmer ist zumindest eine der Anweisungen aus dem Anweisungsvorrat bekannt und er reagiert nach dem Empfang einer ihm bekannten Anweisung entsprechend den Festlegungen, die für diese Anweisung gelten.

Außerdem wird die Aufgabe gelöst durch eine Busanordnung mit einem Bussystem, das nachstehende Teilsysteme enthält:
einen bitparalleler Datenbus;
Stichleitungen, die von einer am Bussystem angeschlossenen Zentraleinheit zu allen übrigen Teilnehmern am Bussystem geführt sind und die zur Teilnehmer-Adressierung dienen;
Steuerleitungen, an die die Zentraleinheit und alle übrigen Teilnehmer angeschlossen sind, und die zur Übertragung von Steuersignalen für einen synchronisierten Datenaustausch dienen;
einen bitparallelen Aufruf-Kommando-Bus zur Übertragung von Anweisungen, genannt Aufruf-Kommando-Codes, die durch diese Zentraleinheit gesendet werden und die für die Dauer einer Bus-Prozedur gültig bleiben, wobei eine Bus-Prozedur der Ablauf einer durch benannte Anweisungen festgelegten Sendefolge zwischen Teilnehmern ist.

Die mit der Erfindung vorgeschlagene Übertragung von Anweisungen, die Elemente einer höheren System-Kommandosprache sind, hat den Vorteil, daß anstelle eines breiten Adressenbusses (d.h. ein Bus mit vielen Leitungen) ein schmaler Aufruf-Kommando-Bus genügt (d.h. ein Bus mit wenig Leitungen) und je nach Bedeutung der zuj übertragenden Daten z.B. unterschiedliche Protokolle, Prozeduren und Sicherungsverfahren vereinbart werden können. An das Bussystem können Geräte unterschiedlicher Fähigkeit angeschlossen werden, d.h. auch Geräte, die nur wenige Codes oder nur einen Code interpretieren können. Weitere Vorteile und Möglichkeiten zur Ausgestaltung des Verfahrens und der Anordnung ergeben sich aus der nachstehenden Beschreibung eines Ausführungsbeispiels anhand der Zeichnung.

Es zeigen:
- Figur 1: die Hardware-Anordnung eines Bussystems in einer Fernwirkstation und
- Figur 2: eine Darstellung der Funktion des Bussystems.

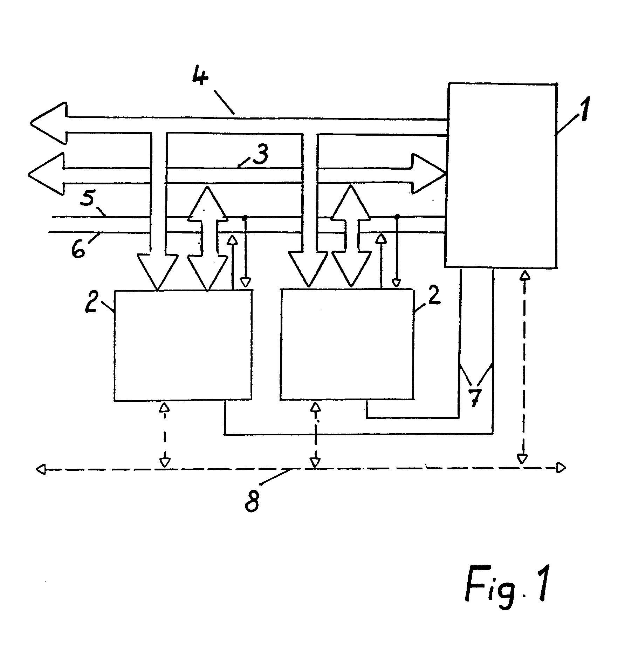

Figur 1 zeigt eine schematisierte Darstellung der Hardware-Anordnung in einer Fernwirkstation. Die Station enthält eine Zentraleinheit 1 und mehrere Peripheriegeräte 2 als Teilnehmer an einem Bussystem, das einen Datenbus 3 und einen Aufruf-Kommando-Bus 4 enthält. Außerdem sind Steuerleitungen 5, 6 sowie Stichleitungen 7 vorgesehen, die die Zentraleinheit 1 mit den Peripheriegeräten 2 verbinden. Zusätzlich kann ein gestrichelt eingetragener bitserieller Bus 8 vorgesehen sein, der alle Geräte 1, 2 miteinander verbindet.

Außer dem erfindungsgemäßen Aufruf-Kommando-Bus 4, der anstelle eines Adressenbusses vorgesehen ist, und dessen Funktion weiter unten näher erläutert wird, sind alle übrigen Komponenten der Fernwirkstation bekannt. Über den z.B. 8-Bit-parallelen, byte-seriellen Datenbus 3 werden in üblicher Weise Daten zwischen den Teilnehmern 1, 2 ausgetauscht. Außerdem kann der Datenbus 3 die Funktion des z.B. 6-Bit-parallelen Aufruf-Kommando-Busses 4 ergänzen. Mit Hilfe der Steuerleitungen Master Synch. 5 und Slave Sync. 6 werden Steuersignale zur Durchführung eines bekannten Handshake-Verfahrens für einen synchronisierten Datenaustausch übertragen. Die Stichleitungen 7 werden zur Adressierung der Peripheriegeräte 2 benutzt. Der bitserielle Bus 8 ist als redundanter Bus vorgesehen. Die Zentraleinheit 1 enthält einen sogenannten Bus-Verwalter zur Steuerung des Informationsflusses auf allen Leitungen 3 bis 8.

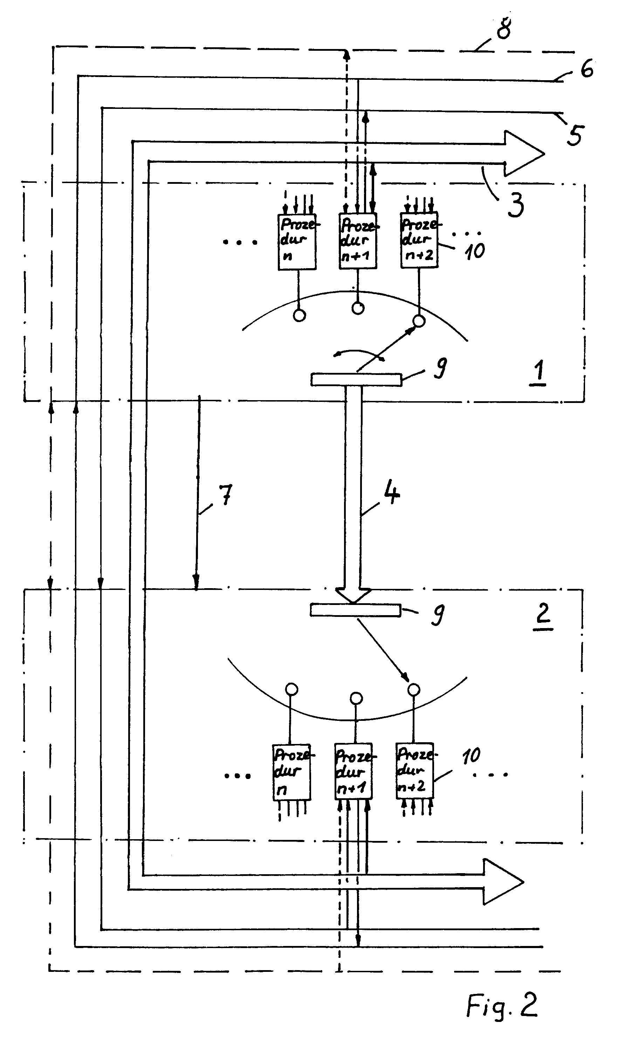

Nachstehend und anhand der Darstellung von Funktionen in Fig. 2 wird der Aufruf-Kommando-Bus 4 sowie das erfindungsgemäße Verfahren zur Datenübertragung zwischen den Teilnehmern 1, 2 am Übertragungssystem 3 bis 7, 8 näher erklärt.

Mit der Erfindung wird vorgeschlagen, eine höhere System-Kommandosprache zu definieren, deren Elemente mit Aufruf-Kommando-Codes 9 bezeichnete Anweisungen sind, die auf dem Aufruf-Kommando-Bus 4 von der Zentraleinheit 1 zu den Peripheriegeräten 2 übertragen werden. Mit einem Aufruf-Kommando-Code 9 werden bestimmte Festlegungen, z.B. bezüglich Übertragungsprotokoll, Bus-Prozedur 10 und Sicherungsverfahren getroffen, die für einen bestimmten Datenübertragungsvorgang gelten sollen. Außerdem kann einem Aufruf-Kommando-Code 9 eine bestimmte Verarbeitungsfunktion in Peripheriegeräten 2 zugeordnet sein, die durch den Empfang des Aufruf-Kommando-Codes 9 ausgelöst werden.

In Fig. 2 ist dargestellt, daß die Zentraleinheit 1 zur Einleitung und Durchführung einer Datenübertragung bzw. zur Auslösung einer bestimmten empfangsseitigen Aktivität einen Aufruf-Kommando-Code 9 auswählt, dem eine bestimmte Prozedur 10 für den Datenaustausch auf dem Datenbus 3 zugeordnet ist. Die Zentraleinheit 1 gibt den gewählten Aufruf-Kommando-Code 9 auf den Aufruf-Kommando-Bus 4 und läßt die damit codierte Information bis zum Abschluß des Übertragungsvorganges - der auf dem Datenbus 3 abgewickelt wird - am Aufruf-Kommando-Bus 4 anstehen. Außerden erfolgt über mindestens eine der Stichleitungen 7 eine Adressierung von mindestens einer Peripherieeinheit 2. Es können auch mehrere oder alle Peripherieeinheiten 2 gleichzeitig adressiert werden. Damit erfolgt eine sogenannte Geräte-Adressierung, womit die ausgewählte Peripherie 2 insgesamt angesprochen wird, nicht eine bestimmte Speicherstelle innerhalb der Peripherieeinheit 2. Mit der Sendung eines Aufruf-Kommando-Codes 9 auf dem Aufruf-Kommando-Bus 4 ist mit dem Empfänger eine Vereinbarung getroffen, bezüglich der mit dem jeweiligen Aufruf-Kommando-Code 9 definierten Festlegungen.

Stehen beispielsweise für den Aufruf-Kommando-Bus 4 sechs Leitungen zur Verfügung, so können maximal 64 unterschiedliche Aufruf-Kommando-Codes 9 übertragen werden. Da mit einem Aufruf-Kommando-Code 9 eine Vielzahl von Festlegungen getroffen werden, bedeuten 64 Aufruf-Kommando-Codes 9 jedoch eine wesentlich höhere System-Fähigkeit und System-Flexibilität als 64 einfache Speicherstellen-Adressen. Die Wahl eines geeigneten Aufruf-Kommando-Codes 9 erfolgt jeweils nach der Art und Bedeutung der zu übertragenden Daten bzw. des zu übertragenden Auftrags.

Wie bereits erwähnt, können mit Aufruf-Kommando-Codes 9 unterschiedliche Übertragungsprotokolle festgelegt werden. Das heißt, es kann z.B. definiert werden, daß Daten mit variabler oder fester Blocklänge übertragen werden oder als Einzelzeichen oder es können variable Datenformate bzw. Datenstrukturen vorgesehen werden.

Weiterhin können mit Aufruf-Kommando-Codes 9 Prozeduren unterschiedlichen Typs festgelegt werden. Solche Prozedur-Typen sind z.B.
a) Auftrag der Zentraleinheit 1 an eine oder meherere Peripherieeinheiten 2 ohne Datensendung und ohne Antwort der Peripherieeinheit 2.
b) Auftrag der Zentraleinheit 1 an eine Peripherieeinheit 2 ohne Datensendung; die Peripherieeinheit 2 antwortet mit einer Statusangabe.
c) Auftrag der Zentraleinheit 1 ohne Datensendung, die Peripherieeinheit 2 sendet Antwortdaten.

Weitere Varianten sind z.B. Aufträge der Zentraleinheit 1 mit oder ohne Daten, wobei die Peripherieeinheit 2 den empfangenen Auftrag erst an die Zentraleinheit 1 zurücksendet (Auftragsreflexion) und erst dann eine Freigabe zur Durchführung des Auftrags erhält.

Eine solche typische Prozedur 10 kann z.B. in folgenden Schritten ablaufen:
1. Die Zentraleinheit 1 sendet auf dem Aufruf-Kommando-Bus 4 einen Aufruf-Kommando-Code 9, der während der gesamten Prozedur weiterhin gesendet wird. Der Aufruf-Kommando-Code 9 braucht daher nicht in den Peripherieeinheiten 2 gespeichert zu werden und kann jederzeit neu gelesen werden. Auf dem Datenbus 3 können im ersten Schritt Zusatz-Informationen zum Aufruf-Kommando-Code 9 gesendet werden.
2. Die Peripherieeinheit 2 antwortet mit der Sendung von Statusangaben auf dem Datenbus 3.
3. Die Zentraleinheit 1 sendet Auftragsdaten eventuell in mehreren aufeinanderfolgenden Datenbytes auf dem Datenbus.
4. Die Peripherieinheit 2 reflektiert diesen Auftrag durch Rücksendung der empfangenen Daten auf den Datenbus 3.
5. Die Zentraleinheit 1 prüft die Übereinstimmung von gesendeten und empfangenen Daten und sendet auf dem Datenbus 3 eine Freigabe zur Durchführung des Auftrages.

Die genannten Aufträge können z.B. Steueraufträge sein, wie z.B. Rücksetzen oder Umspeichern von Zählwerten, Prüf-Routinen oder Abschaltung der Peripherieeinheit 2. Andere Auftragsarten sind Leseaufträge, z.B. "Sende Daten Eingang x", "Sende Spontandaten" oder "Sende Standardstatus" sowie Schreibaufträge wie z.B. "Schreibe Parameter Typ y" oder "Schreibe Daten Ausgang x".

Schließlich können mit Auftrag-Kommando-Codes 9 unterschiedliche Sicherungsverfahren festgelegt werden, z.B. kann eine Übertragung mit oder ohne Check-Byte, mit oder ohne Wiederholung durchgeführt werden und es können bestimmte Diagnose-Routinen gewählt werden.

An das Bussystem als Teilnehmer angeschlossene Peripherieeinheiten 2 können unterschiedlicher Art sein. Beispielsweise ist die Weiterverwendung von Peripheriegeräten 2 aus einem älteren System in dem neuen System möglich, wobei solche Geräte den Aufruf-Kommando-Bus 4 als Adressenbus interpretieren. Für diese Geräte werden einige Aufruf-Kommando-Codes 9 reserviert zur Darstellung von Adressen. Außerdem kann mit einem Aufruf-Kommando-Code 9 auch ein bestimmtes Handshake-Verfahren festgelegt werden, wodurch z.B. auf besonders langsame Peripherieeinheiten 2 Rücksicht genommen werden kann. Durch diese Maßnahmen wird das Bussystem abwärts kompatibel.

Auch von den neuen, speziell für die Teilnahme an dem erfindungsgemäßen Bussystem konzipierten Peripherieeinheiten 2 brauchen keineswegs alle Geräte sämtliche Aufruf-Kommando-Codes 9 zu verstehen. Die Peripherieeinheiten 2 werden lediglich entsprechend ihrer Aufgabe mit den erforderlichen Fähigkeiten ausgestattet. Die Prozedur 10 zur Übertragung von Aufträgen oder Daten kann außerdem je nach Bedeutung der jeweiligen Aufträge oder Daten gewählt werden und zwar individuell für einen bestimmten Übertragungsvorgang. Die Adressierung von Speicherplätzen erfolgt peripheriegeräteintern und wird - in der Regel - nicht übertragen (logische Adressierung).

Die Anwendbarkeit der Erfindung ist nicht auf eine Busanordnung gemäß der Fig. 1 beschränkt, bei der ein bitparalleler Aufruf-Kommandobus 4 zur Übertragung der Aufruf-Kommando-Codes 9 und ein bitparalleler Datenbus 3 vorgesehen sind. Die Aufruf-Kommando-Codes 9 und die damit festgelegten Prozeduren 10 können auch in einem bitseriellen Bussystem Anwendung finden. Die Adressierung der Peripherieeinheit 2 erfolgt dabei mit speziell gekennzeichneten Adresszeichen in der gesendeten Bitfolge (Telegramm). Allerdings läuft dann der Übertragungsvorgang - gleiche Taktrate vorausgesetzt - wesentlich langsamer ab und es ist eine Speicherung des empfangenen Aufruf-Kommando-Codes 9 in der Peripherieeinheit 2 erforderlich. Von dieser Möglichkeit kann z.B. Gebrauch gemacht werden, wenn ein redundantes Bussystem vorzusehen ist, das in Fig. 1 und 2 als bitserielles Bussystem 8 dargestellt ist.

## Patentansprüche

1. Verfahren zur Übertragung von Informationen zwischen Teilnehmern (1,2) an einem Bussystem (3-8), mit nachstehenden Verfahrensmerkmalen:
a) eine am Bussystem angeschlossene Zentraleinheit (1) sendet zumindest am Anfang einer von ihr initiierten Bus-Prozedur (10), wobei eine Bus-Prozedur der Ablauf einer festgelegten Sendefolge zwischen Teilnehmern ist, eine definierte Anweisung, genannt Aufruf-Kommando-Code (9), die aus einem Anweisungsvorrat ausgewählt wird und für die Dauer der Bus-Prozedur gültig bleibt, wobei die definierten Anweisungen Elemente einer höheren System-Kommandosprache sind, mit denen zumindest eine Bus-Prozedur festgelegt ist und mit denen zusätzliche Vereinbarungen getroffen werden können, insbesondere bezüglich des Übertragungsprotokolls, wie z.B. Datenformat, Blocklänge, eines Sicherungsverfahrens, wie z.B. Prüfzeichen, Übertragungswiederholung oder der beim empfangenden Teilnehmer auszulösenden Verarbeitungsfunktionen;
b) jedem Teilnehmer ist zumindest eine der Anweisungen aus dem Anweisungsvorrat bekannt und er reagiert nach dem Empfang einer ihm bekannten Anweisung entsprechend den Festlegungen, die für diese Anweisung gelten.

2. Verfahren nach Anspruch 1, dadurch gekennzeichnet, daß für die Übertragung der gewählten Anweisung ein bitparalleles Teilsystem des Bussystems verwendet wird, wobei die Anweisung während der gesamten Dauer der Bus-Prozedur gesendet wird.

3. Verfahren nach Anspruch 1, dadurch gekennzeichnet, daß für die Übertragung der gewählten Anweisung ein bitserieller Bus oder ein bitserielles Teilsystem eines Bussystems verwendet wird, wobei die Anweisung am Anfang einer bitseriellen Informationsübertragung gesendet wird.

4. Verfahren nach einem der vorstehenden Ansprüche, dadurch gekennzeichnet, daß mit der gesendeten Anweisung beim empfangenden Teilnehmer eine bestimmte Verarbeitungsfunktion ausgelöst wird.

5. Verfahren nach einem der vorstehenden Ansprüche, dadurch gekennzeichnet, daß mit der gesendeten Anweisung eines von mehreren im System verwendeten Sicherungsverfahren vereinbart wird.

6. Verfahren nach einem der vorstehenden Ansprüche, dadurch gekennzeichnet, daß mit der gesendeten Anweisung eines von mehreren im System verwendeten Übertragungsprotokollen vereinbart wird.

7. Verfahren nach einem der vorstehenden Ansprüche, dadurch gekennzeichnet, daß mit der gesendeten Anweisung Vereinbarungen bezüglich des Zeitverlaufs der Signalfolge auf Steuerleitungen getroffen werden.

8. Busanordnung mit einem Bussystem, das nachstehende Teilsysteme enthält:
einen bitparallelen Datenbus (3);
Stichleitungen (7), die von einer am Bussystem angeschlossenen Zentraleinheit (1) zu allen übrigen Teilnehmern (2) am Bussystem geführt sind und die zur Teilnehmer-Adressierung dienen;
Steuerleitungen (5,6), an die die Zentraleinheit (1) und alle übrigen Teilnehmer (2) angeschlossen sind, und die zur Übertragung von Steuersignalen für einen synchronisierten Datenaustausch dienen;
besagte Busanordnung gekennzeichnet durch einen bitparallelen Aufruf-Kommando-Bus (4) zur Übertragung von Anweisungen, genannt Aufruf-Kommando-Codes, die durch diese Zentraleinheit (1) gesendet werden und die für die Dauer einer Bus-Prozedur gültig bleiben, wobei eine Bus-Prozedur der Ablauf einer durch benannte Anweisungen festgelegten Sendefolge zwischen Teilnehmern ist.

9. Busanordnung nach Anspruch 8, dadurch gekennzeichnet, daß Teilnehmer (2) am Bussystem Einrichtungen enthalten zur Interpretation von mehreren Anweisungen.

10. Busanordnung nach Anspruch 8 oder 9, dadurch gekennzeichnet, daß als redundanter Übertragungsweg für wenigstens einen Teil der zu übertragenden Informationen ein zusätzlicher bitserieller Bus (8) vorhanden ist.

## Claims

1. Method for transferring information between subscribers (1, 2) on a bus system (3-8), having the following method features:
a) a central unit (1) connected to the bus system transmits, at least at the beginning of a bus procedure (10) initiated by it, a bus procedure being the execution of a defined transmission sequence between subscribers, a defined instruction, called a call command code (9), which is selected from an instruction set and remains valid for the duration of the bus procedure, the defined instructions being elements of a higher system command language with which at least one bus procedure is defined and with which additional agreements can be made, in particular with respect to the transfer protocol, such as data format, block length for example, to a protection method, such as check characters, transfer repetition for example, or to the processing functions to be initiated at the receiving subscriber;
b) at least one of the instructions from the instruction set is known to each subscriber and after receiving an instruction known to him said subscriber reacts according to the definitions applicable to said instruction.

2. Method according to Claim 1, characterized in that a bit-parallel subsystem of the bus system is used for the transfer of the selected instruction, the instruction being transmitted for the entire duration of the bus procedure.

3. Method according to Claim 1, characterized in that a bit-serial bus or a bit-serial subsystem of a bus system is used for the transfer of the selected instruction, the instruction being transmitted at the beginning of a bit-serial information transfer.

4. Method according to one of the preceding claims, characterized in that a specific processing function is initiated at the receiving subscriber with the instruction transmitted.

5. Method according to one of the preceding claims, characterized in that one of a plurality of protection methods used in the system is agreed with the instruction transmitted.

6. Method according to one of the preceding claims, characterized in that one of a plurality of transfer protocols used in the system is agreed with the instruction transmitted.

7. Method according to one of the preceding claims, characterized in that agreements with respect to the time characteristic of the signal train on control lines are made with the instruction transmitted.

8. Bus arrangement having a bus system which contains the following subsystems:
a bit-parallel data bus (3);
spur lines (7) which are led from one central unit (1) connected to the bus system to all other subscribers (2) on the bus system and which serve for subscriber addressing;
control lines (5, 6) to which the central unit (1) and all other subscribers (2) are connected and which serve to transfer control signals for a synchronized data exchange;
said bus arrangement being characterized by a bit-parallel call command bus (4) for transferring instructions, called call command codes, which are transmitted by said central unit (1) and which remain valid for the duration of a bus procedure, a bus procedure being the execution of a transmission sequence defined by the aforesaid instructions between subscribers.

9. Bus arrangement according to Claim 8, characterized in that subscribers (2) on the bus system contain means for interpreting a plurality of instructions.

10. Bus arrangement according to Claim 8 or 9, characterized in that an additional bit-serial bus (8) is provided as a redundant transfer path for at least part of the information to be transferred.

## Revendications

1. Procédé de transmission d'information entre des abonnés (1,2) d'un système commun de connexions de type bus (3-8) avec les caractéristiques suivantes :
**a**) une unité centrale (1), raccordée au bus, transmet, au moins au début d'une procédure de bus (10), lancée par ses soins, une instruction définie, appelée code d'instructions d'appel (9), ladite procédure de bus constituant le déroulement d'une séquence donnée d'émission entre des abonnés, ledit code d'instructions d'appel (9) étant sélectionné dans une réserve d'instructions et n'étant valable que pendant la durée de la procédure de bus, lesdites instructions définies étant des éléments d'un langage d'instructions évolué de système, avec lesquels est spécifiée au moins une procédure de bus et avec lesquels des spécifications complémentaires peuvent être conclues, en particulier en ce qui concerne le protocole de transmission, telles que format des données et longueur de bloc par exemple, en ce qui concerne un procédé de validation, tel que caractère de contrôle ou répétition de la transmission par exemple, ou encore en ce qui concerne des fonctions de traitement à déclencher chez l'abonné récepteur;
**b**) chaque abonné connaît au moins une des instructions de la réserve d'instructions, et réagit, à la réception d'une instruction qui lui est connue, en fonction des spécifications valables pour cette instruction.

2. Procédé selon la revendication 1 caractérisé par le fait qu'on utilise, pour la transmission de l'instruction choisie, un sous-système du bus pour le transfert en parallèle des informations binaires, l'instruction étant émise pendant toute la durée de la procédure de bus.

3. Procédé selon la revendication 1 caractérisé par le fait qu'on utilise, pour la transmission de l'instruction choisie, un bus de transfert en série des informations binaires ou un sous-système de bus pour le transfert en série des informations binaires, l'instruction étant émise en début de transmission en série des informations binaires.

4. Procédé selon une des revendications précédentes caractérisé par le fait que l'instruction transmise déclenche une fonction de traitement donnée chez l'abonné récepteur.

5. Procédé selon une des revendications précédentes caractérisé par le fait qu'un procédé de validation parmi plusieurs procédés utilisés dans le système est spécifié par l'instruction émise.

6. Procédé selon une des revendications précédentes caractérisé par le fait qu'un protocole de transmission parmi plusieurs procédés de transmission utilisés dans le système est spécifié par l'instruction émise.

7. Procédé selon une des revendications précédentes caractérisé par le fait qu'avec l'instruction transmise, sont définies des spécifications relatives à la chronologie séquentielle des signaux sur les lignes de commande.

8. Configuration de bus avec un bus comportant les sous-systèmes suivants :
- un bus de données (3) pour le transfert en parallèle des informations binaires;
- des lignes de branchement (7) reliant une unité centrale (1), raccordée au bus, à tous les autres abonnés (2), et servant à l'adressage des abonnés;
- des lignes de commande (5, 6), auxquelles sont connectés l'unité centrale (1) et tous les autres abonnés (2), et servant à la transmission de signaux de commande pour un échange de données synchronisé;
- ladite configuration de bus étant caractérisée par un bus d'instructions d'appel (4) pour la transmission d'instructions, appelées codes d'instructions d'émission, qui sont émis par cette unité centrale (1) et qui restent valables pendant toute la durée d'une procédure de bus, une procédure de bus constituant le déroulement d'une séquence donnée d'émissions entre les abonnés.

9. Configuration de bus selon la revendication 8 caractérisée par le fait que les abonnés (2) au bus comportent des installations leur permettant d'interpréter plusieurs instructions.

10. Configuration de bus selon la revendication 8 ou la revendication 9 caractérisée par le fait qu'un bus (8) additionnel de transfert en série d'informations binaires est disponible en tant que voie de transmission redondante pour au moins une partie des informations à transmettre.
